# EUROPEAN PATENT APPLICATION

(11) **EP 1 645 602 A1**
(43) Date of publication of application: **12.04.2006**
(21) Application number: 04024105.1
(22) Date of filing: 08.10.2004
(51) Int. Cl.: C09D 7/12, B41J 2/435, C08K 3/04

(54) **Coating composition, radiation-absorbing coating, coated support and use thereof**

(71) Applicant: Sun Chemical B.V., 1382 LV Weesp (NL)
(72) Inventor: Lange, Frank, 64342 Seeheim-Jugenheim (DE); Thai, Quang Minh, 63500 Seligenstadt (DE); Mondel, Axel, 64521 Gross-Gerau (DE)
(74) Representative: Vossius & Partner

(57) **Abstract**

The present invention provides a coating composition which is suitable for producing a radiation-absorbing coating with outstanding radiation absorptive power, excellent resistance to solvents and plasticizers and high mechanical stability. The coating composition comprises (a) carbon black particles with an average particle size of 10 to 500 nm, (b) a binder selected from at least one polymer displaying functional groups which allow cross-linking via an isocyanate-based cross-linking agent, (c) at least one isocyanate-based cross-linking agent and (d) at least one solvent, wherein the carbon black particles are distributed homogeneously in the composition and the amount of carbon black particles, based on the total amount of components (a), (b) and (c) in the composition, is 75 to 95 wt.-%. The invention also relates to a dimensionally stable support coated with the radiation-absorbing coating that can be produced for example by application, drying and cross-linking of the coating composition. This one can be used as a printing substance support in a printing machine and in a printing process, in particular in digital printing processes which use laser radiation for the transfer of printing substance from a printing substance support to a printing substrate.

## Description

The present invention relates to a coating composition, a coating displaying a high absorptive power for electromagnetic radiation, particularly in the near infrared range, that can be produced therefrom, a dimensionally stable support coated therewith and a process for its production, a printing machine and a printing process, respectively, in which the coated support is used, and finally uses of the coating composition, the coating and the coated support in printing processes, in particular those using laser radiation for the transfer of printing substance from a printing substance support to a printing substrate.

A "printing process" is primarily understood to mean a process for duplicating master copies of texts and/or images any number of times by means of a printing form which is newly supplied with printing substance (conventionally printing ink) after each imprint. A distinction is generally made here between four fundamentally different printing processes. Thus firstly the typographic printing process is known, wherein the printing elements of the printing plate are raised whilst the non-printing parts are recessed. This class includes letterpress printing and so-called flexographic or aniline printing, for example. Also known are planographic printing processes, wherein the printing elements and the non-printing parts of the printing form are essentially on the same level. This class includes offset printing or lithography. A third process is the so-called intaglio printing process, wherein the printing elements of the printing form are recessed. This class includes copper engraving, etching and rotogravure, for example. Finally a porous printing process, also known as screen printing process, is known, wherein the ink on the printing parts is transferred to the printing substrate through screen-like openings in the printing form.

These printing processes are all distinguished by the fact that they require a printing form which is more or less costly to produce, such that these printing processes operate economically only with very high print runs, conventionally well above 1000 copies. These printing plates can only be used to print a specific master copy, however. If a different master copy is to be printed, a new printing form must be produced.

For the printing of small print runs, digitally controllable printing systems (such as laser, thermal and inkjet printers, for example) are already used, which are generally connected to an electronic data processing unit and are capable of printing individual printing dots when required (cf. e.g. GB 2 007 162, DE 195 44 099 or DE 197 46 174). Such processes still commonly display weaknesses, however, such as high energy consumption to print a single printing dot, a restriction on the printing substances that can be used (e.g. regarding the solvent base) or excessive complexity in terms of a continuous supply of printing substance.

The patent application WO-A-01/72518 (cf. also DE-A-100 51 850) describes a printing process that can be performed with a relatively low energy requirement for transferring printing substance from an ink support to a printing substrate or to a transfer medium, wherein the printing substance is subject to a change in volume and/or position due to an induced process by an energy-releasing device, which results in a transfer of a printing dot to the printing substrate or the transfer medium. Here the ink support does not come into direct contact with the printing substrate or the transfer medium but is positioned at a certain distance from it, and the printing substance is applied to the ink support, essentially forming a continuous or homogeneous film. This is intended to achieve a simpler replenishment of the printing substance due to the adhesion or capillary force between the printing substance and the printing substance support (in this case an ink support), without the development of air inclusions.

The energy can in principle be transferred directly to the printing substance. This requires the printing substance to be capable of absorbing the energy, however. This does not apply or does not apply to a sufficient degree to many printing substances. In order to increase the variety of printing substances that can be used, it is therefore advantageous to use an indirect printing process wherein the energy from the energy-releasing device is transferred first to an intermediate material and then from the intermediate material to the printing substance. The intermediate material can be a light-absorbing material, for example, which is arranged in the form of a layer on the printing substance support.

One possibility for energy transfer from the intermediate material to the printing substance is by means of a pulse transmission, for example. In this case a change in the position and/or volume of the material is induced within the intermediate material such that a pulse is transmitted to the printing substance through the movement or expansion of the intermediate material.

It is also possible, however - and this is the case the present invention deals with - for the energy transfer from the intermediate material to the printing substance to be effected by transfer of heat energy. In this case the energy-releasing device first heats the intermediate material at the respective desired location, and this in turn gives off heat energy to the printing substance. In this way a thermophysical reaction such as evaporation, sublimation or thermal expansion of the printing substance can occur, such that it moves beyond the outer contour of the printing substance support and is transferred to the printing substrate, forming a printing dot. The intensity and expansion of the printing dot can be influenced by controlling the pulse length and energy of the energy-releasing device, for example.

A device emitting laser radiation, for example, can be used as energy-releasing device, which offers the advantage that the laser beam, which is conventionally digitally controlled, can be focused on a selected point on the printing substance support. An Nd:YAG laser with a wavelength of 1064 nm is frequently used, for example. In indirect printing processes such as that described above, the energy-absorbing layer should usefully be matched as closely as possible to the absorption of the energy beam such that the energy to be used to transfer a printing dot can be further reduced. Intermediate materials having a particularly high absorptive power in the desired range are therefore required. The absorptive power of many materials that are known to display absorption at 1064 nm is not high enough for such a process, however. Substances such as inter alia aluminium powder, mica and other silicates or Iriodin® LS 825 (Merck Pigmente), which was developed specifically for absorption of Nd-YAG laser radiation, are therefore unsuitable for this purpose.

Patent US-5,854,175 describes a donor element from which dye can be transferred by laser induction onto a dye reception layer and which displays a dye layer and a layer for absorbing laser light. The heat generated by absorption of laser light is intended to bring about the evaporation, sublimation or ablation of the dye, which is initially fixed in the dye layer by means of a polymeric binder, from the dye layer. Dyes, pigments or metals in general are cited as possible absorption materials.

Patent application GB-A-2 083 726 discloses a so-called donor sheet from which dyes can be transferred onto a reception sheet by heating with a scanning, signal-controlled laser beam and which comprises a support, a dye layer comprising at least one dye displaying a certain volatility as well as a heat-resistant binder, such as polycarbonates or cellulose ethers, and a laser radiation-absorbing material. The laser radiation-absorbing material can either be dispersed in the dye layer or can be in a separate layer positioned between the support and the dye layer. A layer of carbon dispersed in an unspecified proportion in acrylic acid-acrylate copolymer is cited as an example of the latter case.

In the already cited patent application WO-A-01/72518 a layer of nanocrystalline material, such as carbon or gas black for example, having a particle size of between 10 and 1000 nm is mentioned as a possible intermediate material, along with a fixing thereof with polysilicate to the printing substance support.

However, almost no more detailed information on the exact composition and production of the absorption layers, their effective absorptive power or other properties of relevance to the intended usage can be obtained from the aforementioned publications. For example, none of the cited documents provides information on the chemical resistance and mechanical stability of the absorption layers described. The layer of radiation-absorbing intermediate material (also referred to hereafter as "radiation-absorbing coating") is conventionally in direct contact with the printing substance used. For that reason it should be as resistant or stable as possible to the components of the printing substance. The most critical components in printing substances such as printing inks in this respect are primarily solvents and plasticizers. High mechanical stability is important in particular for the handling, maintenance or cleaning of the printing substance support provided with the intermediate material. The exchange or cleaning of printing substance supports used in a printing machine can be cited as an example of this. These properties are important not only with regard to a longer-term resistance and stability of the layer as such but also in terms of the widest possible avoidance of undesirable contamination of the printing substance with the radiation-absorbing material or other components of the radiation-absorbing coating. Thus materials that are for example soluble in the solvents conventionally used in printing processes or fibrous or brittle, which break easily under loading or have a tendency towards cracking, flaking or severe abrasion, such as are in some cases also proposed in the aforementioned publications, are of little use as a potential binder for the radiation-absorbing material.

There are currently no known coating systems which combine all the aforementioned desired properties and which from both a practical and an economic perspective meet the requirements for industrial use in indirect printing processes, such as digital laser-based printing processes for example.

One object of the present invention is therefore to provide a radiation-absorbing coating which displays an outstanding radiation absorptive power, in particular of electromagnetic radiation in the near infrared range (e.g. with a wavelength of about 1064 nm), excellent resistance to solvents, in particular those conventionally used in printing inks, such as e.g. ethanol, ethyl acetate, ethoxy propanol and toluene, and to plasticizers, such as e.g. phthalates, adipates, sebacates, phosphates, and a high mechanical stability. The latter includes for example properties such as high abrasion resistance, low fragility and a low tendency towards embrittlement phenomena such as cracking and flaking.

Other objects of the present invention are the provision of a suitable coating composition for the production of a radiation-absorbing coating having the aforementioned properties, a dimensionally stable support coated therewith and a process for its production, a printing machine using such a coated support and finally a printing process in which such a coated support is used.

These objects are achieved, as described below, by the present invention. According to a first aspect it relates to a coating composition comprising (a) carbon black particles with an average particle size of 10 to 500 nm, (b) a binder selected from at least one polymer displaying functional groups which allow cross-linking via an isocyanate-based cross-linking agent, (c) at least one isocyanate-based cross-linking agent and (d) at least one solvent, wherein the carbon black particles are distributed homogeneously in the composition and the amount of carbon black particles, based on the total amount of components (a), (b) and (c) in the composition, is 75 to 95 wt.-%.

The carbon black particles distributed homogeneously in the composition preferably form a stable dispersion therewith.

In a convenient embodiment the coating composition can be a one-component system. Such a one-component system allows a particularly easy handling of the composition. Compositions comprising cross-linking agents having a low reactivity, in particular cross-linking agents containing blocked isocyanate groups, are highly suitable for this purpose, for example. In an alternative embodiment the coating composition can be a two-component system, with the proviso that the binder and the cross-linking agent are not present in the same component and the two components are combined only immediately before the coating composition is used. The carbon black particles are advantageously distributed homogeneously in the component containing the binder before the components are combined. A two-component system can inter alia offer advantages in terms of the storage ability of the composition, for example if a highly reactive cross-linking agent is used.

According to a second aspect the present invention relates to a radiation-absorbing coating comprising (a) carbon black particles with an average particle size of 10 to 500 nm and, as a matrix therefor, a cross-linked polymer obtained by cross-linking (b) a binder selected from at least one polymer displaying functional groups which allow cross-linking via an isocyanate-based cross-linking agent and (c) at least one isocyanate-based cross-linking agent, wherein the carbon black particles are distributed homogeneously in the matrix and the amount of carbon black particles, based on the total weighed-in amount of components (a), (b) and (c), is 75 to 95 wt.-%.

Unless otherwise specified, the term "polymer" in the context of the present invention refers to an organic polymer, which can be both a homopolymer and a copolymer. The "cross-linked polymer" serving as the matrix (also denoted as "matrix-forming polymer") is understood in the present invention to be both a single cross-linked polymer and a cross-linked mixture of more than one polymer. This applies even if only the term "the cross-linked polymer" is used.

Certain technical effects and advantages of the coating composition according to the invention and its embodiments become clear above all in regard to a possible use thereof for the production of a radiation-absorbing coating such as that described above and are therefore also discussed in such a context below.

Carbon black is a material with a very high radiation absorptive power, particularly of electromagnetic radiation in the near infrared range, and is therefore highly suitable as a radiation-absorbing material for use in the aforementioned indirect printing processes. The amount of carbon black particles in the coating composition according to the invention is 75 to 95 wt.-%, preferably 80 to 85 wt.-%, based on the total amount of components (a), (b) and (c) in the composition. In an analogous way, the amount of carbon black particles in the radiation-absorbing coating according to the invention is 75 to 95 wt.-%, preferably 80 to 85 wt.-%, based on the total weighed-in amount of components (a), (b) and (c). Accordingly the proportion of components b) and c) is 5 to 25 wt.-%, preferably 15 to 20 wt.-%. The radiation absorptive power (or radiation energy absorptive power) of a radiation-absorbing coating increases as the content of carbon black particles rises, and hence energy efficiency and printing quality improve when they are used in a printing process. Concurrently, however, the matrix content of the coating and the binder content of the coating composition used to produce such a coating, respectively, falls as the content of carbon black increases. This has on the one hand a negative effect on the stability of the carbon black particle dispersion in the coating composition. There is thus a risk of flocculation in the dispersion, for example. On the other hand it has an effect on the quality of the coating, in the sense of a deterioration in its mechanical stability, for example. Although coatings with a carbon black particle content of more than 95 wt.-% can be produced, the low binder content is noticeable here, the system is susceptible to trouble, the mechanical stability suffers. With a carbon black particle content of less than 75 wt.-% the stability of the system is good, but this is achieved at the cost of the radiation absorptive capacity. A carbon black particle content of 80 to 85 wt.-% as defined above proves to be particularly favourable both in terms of the stability of the coating composition with regard to possible flocculation and in terms of the mechanical stability of a coating resulting from it, combined with retention of a very high radiation absorptive capacity.

The carbon black particles are preferably incorporated into the matrix-forming cross-linked polymer structure of the coating or in other words they are enveloped by it. This is achieved in that the uncross-linked (or at most slightly cross-linked) polymer forming the basis of the matrix-forming cross-linked polymer in the coating according to the invention and the cross-linking agent are only cross-linked to form the matrix after the homogeneous distribution of the carbon black particles therein. These conditions are met if for example the radiation-absorbing coating is produced by drying and cross-linking the coating composition according to the invention. In this way the carbon black particles are enveloped by the cross-linked polymer structure formed during cross-linking and are firmly anchored within it, and coatings with a higher stability and robustness are generally obtained than is the case if the carbon black particles are introduced into an already cross-linked polymer, particularly with very high carbon black particle contents.

The smaller the size of the carbon black particles, the larger their surface area and hence the binder requirement in a coating composition containing the particles or the matrix proportion needed for adequate stability in a coating containing the particles, respectively. If the particles are too small it is therefore not possible to obtain coatings with the desired high carbon black particle content from the coating composition. Instead of that, particle sizes that are too small lead to mechanically unstable, easily crumbling coatings with inadequate bonding on the support surface. If the particles are too large, this has a negative impact in two respects. Firstly there is a risk of particles protruding from the surface and producing a surface roughness, which leads to low long-term strength of the coating due to greater abrasion. Secondly, coarser particles require a greater layer thickness for an adequate absorption performance due to lower packing density. That is why in the coating composition according to the invention and the radiation-absorbing coating according to the invention, respectively, carbon black particles with an average particle size of 10 to 500 nm are used. With regard to the aforementioned aspects, an average particle size of the carbon black particles of 15 to 100 nm and in particular an average particle size of 30 to 70 nm has proved to be extremely advantageous. An average particle size of the carbon black particles of 50 to 60 nm is ideal with regard to the cited aspects and is therefore most preferable. The carbon blacks Monarch® 1300 from Cabot (13 nm), Monarch® 1100 from Cabot (14 nm), Printex® 300 from Degussa (27 nm), Printex® 200 from Degussa (56 nm) and Black Pearls® 120 from Cabot (60 nm) can be cited as examples of suitable carbon blacks for use in the present invention (the average particle sizes according to information supplied by the manufacturer are shown in brackets). Specific individual examples for carbon blacks of the preferred particle sizes can likewise be taken from the above list. Particularly high carbon black particle contents can be achieved in this way. Scanning electron microscopic or transmission electron microscopic images of the carbon black used, which are analysed using a computer-aided image analysis system, are conventionally used as the basis for determining the particle size or particle size distribution, respectively. Here several thousand particles are counted and measured for their size and the arithmetic mean of the measurement results obtained is calculated.

The binder used in the present invention is advantageously selected from at least one polymer based on a polyvinyl chloride (PVC), polyvinyl butyral (PVB), polyurethane (PU), polyether polyol, polyester polyol, fluorinated resin, chlorinated polyethylene (chlorinated PE) or chlorinated polypropylene (chlorinated PP). The binder is preferably selected from at least one polymer based on a polyvinyl chloride, polyvinyl butyral, polyether polyol or polyester polyol. Selection of the binder from at least one polymer based on a polyvinyl chloride or polyvinyl butyral is particularly preferred. The best results are obtained with a polymer based on a polyvinyl chloride. The polymer types that are suitable as binders are also characterised in that they display functional groups (either as an inherent property of the polymer type itself or as a consequence of its conventional production method or a selective modification, such as e.g. by interpolymerisation of suitable monomers or subsequent functionalisation or the like), which allow cross-linking via an isocyanate-based cross-linking agent. "Selection from at least one polymer based on..." means that various of the aforementioned polymers of the same or of a different type can be combined as well. Particularly suitable individual examples of polymers that can be used within the context of this invention are Ucar™ VAGH Solution Vinyl Resin from Dow Chemical (as an example of a PVC-based polymer; hydroxy-functionalised, partially hydrolysed vinyl chloride-vinyl acetal copolymer); Pioloform® BN 18 from Wacker (as an example of a PVB-based polymer; partially hydroxy-functionalised polyvinyl butyral, which also displays a small amount of vinyl acetate units in the polymer due to its production from polyvinyl alcohol and butyraldehyde); Elastollans® from Elastogran (as an example of PU-based polymers), such as those of type 11 80 A 10 000 (a polyurethane based on polyether polyol and isocyanate), 685 A 10 000 (a polyurethane based on polyester polyol and isocyanate), 92 13 10 000 or 880 A 13 000; Desmophens® from Bayer, such as those of type 1900 U and 1915 U (as an example of polymers based on polyether polyol) and those of type 1700 and 1800 (as an example of polymers based on polyester polyol); and Lumiflon™ LF-552 from Avecia NeoResins (as an example of a polymer based on fluorinated resin; hydroxy-functionalised fluoroethylene-alkyl vinyl ether).

The polymers used should preferably satisfy two basic requirements. In the uncross-linked state they should be soluble in at least one solvent to ensure they can be processed in the intended way. After cross-linking, however, they should display an adequate mechanical stability and resistance to the solvents conventionally used in printing processes. This means that the cross-linked polymers should conveniently neither be soluble nor swell in such solvents. The aforementioned polymers satisfy these criteria and also allow the production of coatings with very high contents of carbon black particles.

Where several polymer types are combined, they can be selected independently from one another. Polymers based on a polyether polyol or polyester polyol, respectively, are particularly suitable for mixtures with one another or with polymers based on a polyvinyl chloride, however. A mixture of one or more of the above Desmophens 1700, 1800, 1900 U and 1915 U with the aforementioned Ucar™ VAGH Solution Vinyl Resin can be cited as example thereof. Stable, homogeneous dispersions and uniform, glossy coatings are obtained with all cited Desmophens, the use of Desmophen® 1900 U or Desmophen® 1915 U leading to lower viscosities and easier processing ability of the coating compositions than that of Desmophen® 1700 or Desmophen® 1800 and therefore being preferred.

The functional groups that allow cross-linking via an isocyanate-based cross-linking agent (i.e. isocyanate-reactive functional groups) can be selected for example from hydroxyl groups, primary and secondary amino groups, mercapto groups and other groups displaying a reactivity with isocyanates, such as amide groups ―NH―C(O)― and carboxyl groups - (CO)OH for instance, as well as any combinations thereof. According to a preferred embodiment the functional groups that allow cross-linking via an isocyanate-based cross-linking agent are selected from hydroxyl groups, primary and secondary amino groups and mercapto groups or any combinations thereof. Hydroxyl groups and primary and secondary amino groups and any combinations thereof are particularly preferable from the point of view of reactivity and economic considerations. Most preferable with regard to their reactivity are hydroxyl groups. The degree of cross-linking that can be achieved can be influenced by the content of groups that can be cross-linked via an isocyanate-based cross-linking agent.

Both the chemical resistance and the mechanical stability of the coatings obtained can also be influenced by the type of cross-linking agent and the amount that is used. The person skilled in the art will choose suitable cross-linking agents and amounts of cross-linking agents according to the chosen polymers displaying cross-linkable functional groups.

An isocyanate-based cross-linking agent conventionally means a compound displaying two or more isocyanate groups. Mixtures of any combinations of several such cross-linking agents can also be used according to the invention. The cross-linking agent in each case is preferably selected from a polyisocyanate, a diisocyanate and a triisocyanate, more preferably from a diisocyanate and a triisocyanate, and most preferably from a triisocyanate, in order to achieve an adequate stability of the coating. One example of a suitable triisocyanate is Desmodur® L 75 from Bayer. This is a low-reactivity isocyanate. Although on the one hand this can mean that longer reaction times and higher cross-linking temperatures are necessary, it nevertheless results in coatings having very good stability.

The isocyanate group in the respective cross-linking agent can furthermore be blocked with suitable groups known in the art, such as phenol groups (e.g. as in Desmodur® CT stabil from Bayer or similar cross-linking agents such as e.g. Super CY Stable from Sikane). Cross-linking agents with blocked isocyanate groups are of particular benefit in one-component systems of the coating composition according to the invention, to prevent premature cross-linking and to make the composition capable of being stored.

Isocyanates are in principle capable of reacting with themselves, above all in the presence of traces of moisture. This means that even if an excess of the cross-linking agent, based on the cross-linkable groups present in the polymer to be cross-linked, is originally added, after cross-linking essentially no free cross-linking agent molecules remain in the matrix. In other words, by reacting with the cross-linkable groups in the uncross-linked (or at most slightly cross-linked) polymer forming the basis of the matrix-forming polymer and optionally also with other cross-linking agent molecules, during cross-linking the cross-linking agent becomes part of the matrix-forming polymer.

The amount of cross-linking agent that is added is thus conveniently chosen such that the ratio of the total number of isocyanate groups in the cross-linking agent to the total number of functional groups allowing cross-linking via an isocyanate-based cross-linking agent in the binder is equal to 1 (stoichiometric ratio) or greater than 1 (excess of isocyanate groups). The amount of cross-linking agent that is added is preferably chosen such that there is an excess of the total number of isocyanate groups in the cross-linking agent in comparison to the total number of functional groups allowing cross-linking via an isocyanate-based cross-linking agent in the binder of 0 % (stoichiometric ratio) to 200 %, particularly preferably of 125 % to 170 % and most preferably of about 150 %. The preferred cross-linking conditions are described further on.

The choice of the solvent or solvent mixture that is used depends on several criteria. In principle, such solvents that essentially display no reactivity to isocyanates, such as non-protic solvents, are particularly suitable here.

The solubility of the polymer that is used also plays a role. The binder and the cross-linking agent should preferably each be completely dissolved in the coating composition, regardless of whether it is a one-component or two-component system. This means that the solvent should preferably be chosen such that it is capable of completely dissolving both the binder and the cross-linking agent.

From the viewpoint of reactivity and solution properties, non-protic solvents are particularly suitable, such as non-protic esters such as for example n-butyl acetate, ketones such as for example 2-butanone (MEK), aromatic hydrocarbons such as for example toluene and xylene, amides such as for example 1-methyl-2-pyffolidone (NMP) and dimethyl formamide (DMF) and sulfoxides such as for example dimethyl sulfoxide (DMSO) as well as any mixtures thereof.

The choice of preferred solvent is conveniently matched to the polymer or polymer mixture that is used, particularly with regard to its solubility. For example, such solvents that contain certain proportions of ketones, such as 2-butanone, are frequently particularly suitable for the dissolution of polymers based on polyvinyl chlorides, whilst solvents such as 1-methyl-2-pyrrolidone, dimethyl sulfoxide and dimethyl formamide are particularly suitable for the dissolution of polymers based on polyurethanes, such as Elastollans. The following combinations have proven themselves in particular: mixtures of n-butyl acetate and 2-butanone for polymers based on polyvinyl chlorides, polyvinyl butyrals, polyether polyols or polyester polyols, mixtures of xylene and 2-butanone for polymers based on fluorinated resins, mixtures of 1-methyl-2-pyrrolidone and 2-butanone for polymers based on polyurethanes and mixtures of xylene and toluene for polymers based on chlorinated polyethylenes or polypropylenes. Advantageous mixing ratios of these combinations can in some cases also be taken from the production examples according to the invention.

Moreover, the drying rate of the coating composition should conveniently not be too high, to avoid resulting problems in the processing of the coating composition. The use of low-volatility solvent alternatives, for example, can offer advantages in this regard, for example the replacement of ethyl acetate with n-butyl acetate.

Finally, toxicological considerations can also play a role. Under this aspect 1-methyl-2-pyrrolidone, for example, is a preferred alternative to dimethyl formamide.

In consideration of the above viewpoints, n-butyl acetate, 2-butanone, 1-methyl-2-pyrrolidone, xylene, toluene or mixtures thereof are in particular preferred solvents according to the invention.

Total amounts of solvent that are conveniently used can be in the range for example from 35 to 90 wt.-%, preferably 35 to 75 wt.-%, more preferably 50 to 75 wt.-% and most preferably 65 to 75 wt.-%, based on the overall composition. Preferred amounts of solvent in the aforementioned mixtures of n-butyl acetate and 2-butanone for polymers based on polyvinyl chlorides, polyvinyl butyrals, polyether polyols or polyester polyols are 25 to 45 wt.-% per solvent, in mixtures of xylene and 2-butanone for polymers based on fluorinated resins they are 25 to 45 wt.-% for xylene and 20 wt.-% for 2-butanone, in mixtures of 1-methyl-2-pyrrolidone and 2-butanone for polymers based on polyurethanes 35 to 50 wt.-% for 1-methyl-2-pyrrolidone and 20 to 30 wt.-% for 2-butanone and in mixtures of xylene and toluene for polymers based on chlorinated polyethylenes or polypropylenes 25 to 45 wt.-% per solvent or 35 to 75 wt.-%, respectively, if xylene is used alone.

Accordingly the proportion of components a), b) and c) in the overall composition is conveniently 10 to 65 wt.-%, preferably 25 to 65 wt.-%, more preferably 25 to 50 wt.-% and most preferably 25 to 35 wt.-%.

The coating composition according to the invention can additionally contain one or more other additives. These include stabilisers (conveniently in a total amount of 0.01 to 1 wt.-%, preferably 0.05 to 0.1 wt.-%, based on the overall composition, the proportion of solvent being reduced by the proportion of additives that is added), such as e.g. epoxidized soy bean oil and ERL 4221 from Dow Chemical; waxes; fillers, such as e.g. carbonates, kaolins, silicates and metal oxides; wetting agents or dispersing agents (conveniently in a total amount of 0.1 to 5 wt.-%, preferably 0.1 to 3 wt.-%, based on the overall composition, the proportion of solvent being reduced by the proportion of additives that is added), such as e.g. fatty acids, ethoxylated fatty acids, alkyl ammonium salts of polycarboxylic acids, alkylethoxylated alcohols, alkylethoxylated acids, copolymers with pigment-attracting groups and ethoxylated amino alcohols; and cross-linking catalysts (conveniently in a total amount of 0.01 to 0.2 wt.-%, based on the overall composition, the proportion of solvent being reduced by the proportion of additives that is added), such as e.g. amines, such as tertiary amines, and heavy metallo-organic compounds such as heavy metal butylates and heavy metal octoates. Individual additives can be selected independently from one another from this list.

The above stabilisers are preferably used in such compositions which contain at least one polymer based on a polyvinyl chloride.

Further details of the amounts of various components typically used in the coating composition according to the invention can also be taken from the examples according to the invention.

An embodiment of the present invention also provides for the provision of the radiation-absorbing coating according to the invention on a dimensionally stable support.

In an analogous way according to a third aspect the present invention relates to a coated dimensionally stable support displaying a coating composition or a radiation-absorbing coating according to the invention. The coating composition or the coating can be applied to one or more surfaces of the support or parts thereof.

The term "dimensionally stable support" refers in the present invention to an extensive macroscopic entity, which can be plane or curved and which under conventional environmental conditions (i.e. room temperature and atmospheric pressure) and operating conditions (i.e. the temperature and pressure conditions which can arise during an intended use, for example as a printing substance support in a printing process) is subject to no dimensional change having a detrimental effect on the printing quality.

If a coated support is used as a printing substance support in a printing process, the coating is usually subject to a certain gradual wear during the printing operation, in other words it becomes thinner over time. The printing substance support must therefore be replaced from time to time. This should not be the case too frequently, however. The wear resistance of the coating, which depends firstly on the stability of the coating and secondly on the layer thickness, is therefore important.

The layer thickness of the coating according to the invention is conveniently 0.5 *µ*m to 200 *µ*m. A film thickness of at least 0.5 *µ*m ensures an adequate radiation absorptive power of the coating according to the invention. A somewhat higher layer thickness, preferably from 2 µm to 200 µm, offers advantages in regard to the wear resistance of the support (e.g. a print roller). A layer thickness of 2 µm or more has proven favourable with regard to abrasion. Layer thicknesses of no more than 200 µm have the advantage of a low risk of possible cracks on drying and of mechanical damage due to embrittlement (e.g. flaking of the coating).

In principle the dimensionally stable support as such can consist of any solid material or composite material that is suitable for the intended use thereof. It preferably consists of metal such as e.g. steel or aluminium; glass; plastic material such as e.g. polyester or polyvinyl chloride; ceramic material; or composite materials of two or more of the aforementioned materials. For certain uses it can be advantageous if the support is transparent, in other words translucent or translucid. In these cases the support preferably consists of a transparent material such as glass. For certain applications frosted glass can be particularly preferred.

The dimensionally stable support can exhibit various forms and can for example be cylindrical or in band form or take the form of a sleeve or a plane or curved plate.

According to an advantageous embodiment of the invention the support is a sleeve. The use of such readily replaceable sleeve systems allows a particularly rapid, easy and optionally even automated cleaning of the printing substance supports.

According to a further advantageous embodiment of the invention the coated dimensionally stable support is cylindrical. The cylindrical dimensionally stable support can be a full-material cylinder (i.e. a massive cylinder). Alternatively it can be a hollow cylinder. A special form of a hollow cylinder is a tubular support.

The cylindrical dimensionally stable support conveniently has a diameter of 50 mm to 100 mm, preferably 60 mm. If the diameter is less than 50 mm, problems can occur for example with the focusing of an energy-releasing device, such as a laser, in the print gap due to lack of space. If the diameter is greater than 100 mm, the printing substance can dry out on the support. When used as a printing substance support in a printing process, the width of the cylindrical dimensionally stable support limits the printable web width and should therefore not be too small. Since in printing processes which use a laser as the energy-releasing device to transfer a printing substance from a printing substance support to a printing substrate, focusing of the laser becomes difficult at too large angles, the upper limit of the printable width and hence of the width of the cylindrical dimensionally stable support is restricted by optical laws. A width of 300 mm to 600 mm is recommended. A cylinder width of 300 mm to 500 mm is particularly convenient in this sense. A width of 500 mm is most preferred. Greater widths could also be achievable in future, however, through the use of multiple lasers or improved laser technology.

The support also advantageously displays an essentially smooth surface, preferably with an arithmetic average roughness of less than 5 *µ*m. The resolution of the printing process can thus be set almost without restriction. Moreover the position of the printing dot can be freely chosen. According to one embodiment the support is completely smooth (in the sense of optically bright). According to an alternative embodiment it displays an arithmetic average roughness of at least 0.1 µm, preferably between 0.5 µm and 5 µm, and particularly preferably between 1 *µ*m and 2 µm. This is particularly advantageous in applications in which the support is used as a printing substance support in a printing process and an elevated printing substance thickness is desired on the printing substrate to be imprinted. Such an average roughness can be achieved for example by using frosted glass as the support material. Within the meaning of the present invention such surfaces are still regarded as being essentially smooth, in contrast to surfaces intentionally provided with macroscopic indentations, such as grooves and saucers, or bumps.

According to a fourth aspect the present invention relates to a process for coating a dimensionally stable support comprising the steps of (i) providing the coating composition according to the invention; (ii) applying the coating composition in the form of a layer onto at least one surface of a dimensionally stable support; and (iii) drying; and (iv) cross-linking the applied coating composition to obtain a radiation-absorbing coating.

The radiation-absorbing coating according to the invention is preferably obtained by this process.

The coating composition can be applied by conventional processes known to the person skilled in the art. The so-called "dip coating" process can be cited as an example. Here the coating composition is introduced into a vessel. The support is dipped and then removed at a uniform, defined speed. The disadvantage of the process lies in the fact that even when coating individual supports a relatively large amount of coating composition is needed to fill the dipping vessel, the bulk of which in some cases must then be discarded. The so-called "spray coating" process can also be cited. Here the coating composition is applied with a spray gun. The process is also possible with small amounts of coating composition, but it conventionally requires a lower viscosity of said coating composition than the dip coating process. Both processes are equally suitable in principle.

Drying and cross-linking can take place simultaneously or one after the other. The latter possibility is preferred, particularly if the two steps take place at different temperatures. Drying is preferably performed at room temperature. It is known to the person skilled in the art that too rapid drying at too high temperatures, particularly at temperatures above the boiling point of the solvent(s) used, can lead to cracking and blistering. Cross-linking is conveniently performed at elevated temperature, preferably at a temperature of 80°C to 180°C, more preferably at a temperature of 90 to 150°C and most preferably at a temperature of about 150°C. Any solvent residues possibly remaining in the coating are also released in this process. Below 90°C and especially below 80°C the time needed to cure is correspondingly longer. For example, cross-linking by means of more reactive isocyanates can take place even at room temperature. In order to achieve a very good stability in the resulting coatings, however, the curing time in such cases can be up to one week. This is disadvantageous not only because of the long waiting times. The longer the reaction between the cross-linking agent and the polymer displaying groups that can be cross-linked via the cross-linking agent takes, the more water (atmospheric moisture) can diffuse into the layer and react with the cross-linking agent. This can have a detrimental effect on the cross-linking quality. Too low temperatures can thus lead not only to very much longer curing times but also to less stable coatings. Above 150°C and especially above 180°C, decomposition can occur in some polymers, for example those based on polyvinyl chloride, optionally also depending on the cross-linking time (i.e. length of application of heat). At about 150°C a rapid cure occurs, with minimised risk of decomposition of the polymers contained in the coating composition, and very good results in terms of coating quality are obtained. This is particularly the case when less reactive cross-linking agents (e.g. Desmodur® L 75) are used.

The nature of the cross-linking agent can also play a role. Advantageous cross-linking temperatures for unblocked cross-linking agents are conventionally in a range from 80 to 150°C, those for blocked cross-linking agents in a range from 140 to 180°C. The cross-linking time here can be 30 to 60 minutes, for example.

For the reasons already set out above, the layer thickness of the dried and cross-linked coating in the process according to the invention is conveniently 0.5 *µ*m to 200 *µ*m.

The dimensionally stable support to be coated by the process according to the invention is preferably defined as described above.

According to a fifth aspect the present invention relates to the use of the coating composition according to the invention for producing a radiation-absorbing coating on a dimensionally stable support, which is preferably defined as described above.

According to a sixth aspect the invention relates to the use of the radiation-absorbing coating according to the invention in a printing process for absorbing radiation and converting the radiation to heat.

The radiation is preferably a radiation in the infrared range, most preferably a radiation having a wavelength of 1064 nm.

As already mentioned, the coated dimensionally stable support according to the invention can be used as a printing substance support in a printing machine or a printing process.

Correspondingly, according to a seventh aspect, the present invention relates to the use of the coated dimensionally stable support according to the invention for transferring printing substance to a printing substrate with an energy-releasing device which is arranged such that energy can be transferred in a targeted manner to certain areas of the coated dimensionally stable support, wherein the coated dimensionally stable support is intended to accept printing substance essentially in the form of a continuous film. A continuous film is preferably formed.

According to an eighth aspect the present invention relates to a printing machine for imprinting of a printing substrate with the coated dimensionally stable support according to the invention (functioning as a printing substance support) and an energy-releasing device which is arranged such that energy can be transferred in a targeted manner to certain areas of the coated dimensionally stable support, wherein the coated dimensionally stable support is intended to accept printing substance essentially in the form of a continuous film. A continuous film is preferably formed.

According to a ninth aspect the present invention relates to a printing process for transferring printing substance from the coated dimensionally stable support according to the invention (functioning as a printing substance support) to a printing substrate or a transfer medium wherein the printing substance is subject to a change in volume and/or position due to an induced process by an energy-releasing device, which results in a transfer of a printing dot to the printing substrate or the transfer medium, wherein the printing substance is applied to the coated support essentially in the form of a continuous film.

Preferred examples of a printing machine and a printing process, respectively, in which the coating composition according to the invention (as the basis for producing the coating), the radiation-absorbing coating according to the invention and the coated support according to the invention can be used are the printing machine and the printing process that are claimed in patent application WO-A-01/72518.

In contrast to most known processes, in this case the printing substrate does not touch the printing substance support. A gap of preferably at least 10 *µ*m, particularly preferably about 50 *µ*m, is preferably retained between the printing substance support provided with printing substance and the printing substrate.

The energy-releasing device is conveniently at least one device emitting laser radiation (laser source). In some circumstances arrangements of laser diodes can also be used as laser sources, but classic lasers, conveniently with an output of the order of 50 to 100 W or more, are still preferred at present. The laser beam is directed onto selected points to be printed on the dimensionally stable support and is preferably focused. A laser array can also be used instead of an individual laser.

The energy release is preferably effected by the emission of a laser pulse. The pulse length of the laser pulse used is advantageously less than 1 *µ*s, preferably less than 500 ns, particularly preferably between 100 and 200 ns. Due to the very short pulse length (with an adequate overall energy), the laser energy is locally limited very well and a clean printing of printing dots is achieved without the capillary forces of the printing substance forming a continuous film manifesting themselves negatively. A laser pulse having a pulse length of a few femtoseconds can advantageously also be used. The diameter of the printing dot can be adjusted by varying the laser energy and/or by varying the pulse length.

To reduce the risk of a possible detachment of the radiation-absorbing coating from the printing substance support due to the amount of energy transferred, the energy-releasing device is advantageously arranged such that the light beam is directed onto the coating not through the printing substance support but from the side of the printing substance support provided with the printing substance. In this case the light beam is first directed through the printing substance and then meets the radiation-absorbing coating.

The laser beam does not necessarily have to meet the printing substance support or the printing substance surface, respectively, perpendicularly. It can form an angle greater than 0° and preferably less than 75°, particularly preferably less than 60°, with the normal on the printing substance surface.

To ensure an optimum transfer of the printing dot to the printing substrate or the transfer medium, the distance between the focal point of the light beam and the location of the printing dot to be applied on the printing substrate or the transfer medium of less than 2 mm, preferably less than 1 mm, particularly preferably even less than 0.5 mm, is chosen.

The use of a transfer medium that is translucent can optionally be provided, such that the energy-releasing device can supply energy in the form of light through the transfer medium onto the side of the printing substance support provided with the printing substance and thereby induce a change in the volume and/or position of the printing substance.

In the printing machine according to the invention or the printing process according to the invention a focusing device, a deflecting device, a deviating device and/or an addressing device for the laser beam can also be provided, as described from line 12 on page 9 to line 3 on page 11 or in the claims of patent application WO-A-01/72518.

### EXAMPLES

The present invention is described in more detail by reference to the following examples, which do not restrict the invention. The amounts of the components in the formulations for the coating compositions are given in wt.-%. The indications of amounts for Desmodur® L 75 in the examples refer in each case to a 75% solution in ethyl acetate, which is the form in which the product is commercially available. The layer thicknesses of the coatings produced in the examples and reference examples are in the range from 1.5 to 3 *µ*m. The test methods set out below were used to analyse the coatings that were obtained.

### Evaluation of solvent resistance and mechanical stability

In order to evaluate the solvent resistance of the cured coatings they were each stored for 7 days in
a) ethanol/ethyl acetate in the ratio 1:1 1
b) ethanol/ethyl acetate/dioctyl phthalate in the ratio 4:4:2
c) toluene
   and then rubbed with a white cloth moistened with ethyl acetate. If no black coloration of the cloth could be detected, the solvent resistance and mechanical stability were rated as very good. If a very slight black coloration of the cloth was detected, the solvent resistance and mechanical stability were rated as good. If a severe to very severe black coloration of the cloth was detected, the solvent resistance and mechanical stability were rated as low to very low.

### Evaluation of the radiation absorptive power

Two tests were performed using a laser beam with a wavelength of 1064 nm to evaluate the radiation absorptive power of the cured coatings.

In a first test the coating composition to be tested was applied to an object support, dried and cross-linked as described in the examples, wetted with a drop of ethanol as an example of a conventional solvent used in printing inks and then hit with the laser beam. The solvent cloud formed was evaluated with the naked eye.

In a second test the coating composition to be tested was applied to a print roller, dried and cross-linked as described in the examples, and the print roller coated in this way was then used as an ink support in a laboratory printing machine in a digital laser printing process. By presetting the laser energy to various levels and comparing the print results obtained, the laser energy needed to produce a print image of a certain quality was compared with that necessary to produce a print image of the same quality with a proprietary polyester-based radiation-absorbing coating with a carbon black content of about 50% serving as a reference.

The radiation absorptive power was rated as "very good" if about 30 % less laser energy was needed to obtain a print image of the same quality as that obtained using the aforementioned reference. It was rated as "good" if about 20 % less laser energy was needed to obtain a print image of the same quality.

### Example 1

A solution comprising a PVC-based polymer and carbon black particles dispersed therein and an isocyanate solution were combined, homogenized and poured onto a glass plate. After drying at room temperature the coating composition was cross-linked at 150°C for 30 minutes.

**Formulation of the coating composition:**

| | |
|---|---|
| Ucar™ VAGH Solution Vinyl Resin (Dow Chemical) | 4.0 |
| n-Butyl acetate | 33.7 |
| 2-Butanone | 34.6 |
| Black Pearls® 120 (Cabot) | 25.0 |
| Desmodur® L 75 (Bayer) | 2.6 |
| Epoxidized soy bean oil | 0.1 |
| Total | 100.0 |

The resulting coating containing about 81 wt.-% of carbon black particles (average particle size 60 nm) was solvent-resistant (e.g. to ethanol, ethyl acetate, ethoxy propanol, toluene and the combinations of solvents and plasticizers used in the aforementioned test) to a very high degree, displayed very good mechanical stability and very strong absorption in the near infrared range of electromagnetic radiation. Based on these properties the coating is very well suitable as a radiation-absorbing coating for digital laser-based printing methods.

### Example 2

A solution comprising a PVC-based polymer and carbon black particles dispersed therein and an isocyanate solution were combined, homogenized and poured onto a glass plate. After drying at room temperature the coating composition was cross-linked at 150°C for 30 minutes.

**Formulation of the coating composition:**

| | |
|---|---|
| Ucar™ VAGH Solution Vinyl Resin (Dow Chemical) | 3.0 |
| n-Butyl acetate | 34.9 |
| 2-Butanone | 35.0 |
| Black Pearls® 120 (Cabot) | 25.0 |
| Desmodur® L 75 (Bayer) | 2.0 |
| Epoxidized soy bean oil | 0.1 |
| Total | 100.0 |

The resulting coating containing about 85 wt.-% of carbon black particles (average particle size 60 nm) was solvent-resistant (e.g. to ethanol, ethyl acetate, ethoxy propanol, toluene and the combinations of solvents and plasticizers used in the aforementioned test) to a very high degree, displayed very good mechanical stability and very strong absorption in the near infrared range of electromagnetic radiation. Based on these properties the coating is very well suitable as a radiation-absorbing coating for digital laser-based printing methods.

### Example 3

A solution comprising a PVC-based polymer and carbon black particles dispersed therein and an isocyanate solution were combined, homogenized and poured onto a glass plate. After drying at room temperature the coating composition was cross-linked at 150°C for 30 minutes.

**Formulation of the coating composition:**

| | |
|---|---|
| Ucar™ VAGH Solution Vinyl Resin (Dow Chemical) | 4.0 |
| n-Butyl acetate | 33.7 |
| 2-Butanone | 34.65 |
| Printex® 200 (Degussa) | 25.0 |
| Desmodur® L 75 (Bayer) | 2.6 |
| Epoxidized soy bean oil | 0.05 |
| Total | 100.0 |

The resulting coating containing about 81 wt.-% of carbon black particles (average particle size 56 nm) was solvent-resistant (e.g. to ethanol, ethyl acetate, ethoxy propanol, toluene and the combinations of solvents and plasticizers used in the aforementioned test) to a very high degree, displayed very good mechanical stability and strong absorption (only slightly lower than in Example 1) in the near infrared range of electromagnetic radiation. Based on these properties the coating is very well suitable as a radiation-absorbing coating for digital laser-based printing methods.

### Example 4

A solution comprising a PVC-based polymer and carbon black particles dispersed therein and an isocyanate solution were combined, homogenized and poured onto a glass plate. The viscosity of this coating composition was higher than in Examples 1 and 2. After drying at room temperature the coating composition was cross-linked at 150°C for 30 minutes.

**Formulation of the coating composition:**

| | |
|---|---|
| Ucar™ VAGH Solution Vinyl Resin (Dow Chemical) | 4.0 |
| n-Butyl acetate | 33.7 |
| 2-Butanone | 34.65 |
| Printex® 300 (Degussa) | 25.0 |
| Desmodur® L 75 (Bayer) | 2.6 |
| Epoxidized soy bean oil or ERL 4221 | 0.05 |
| Total | 100.0 |

The resulting coating containing about 81 wt.-% of carbon black particles (average particle size 27 nm) was solvent-resistant (e.g. to ethanol, ethyl acetate, ethoxy propanol, toluene and the combinations of solvents and plasticizers used in the aforementioned test) to a high degree, displayed good mechanical stability and strong absorption (only slightly lower than in Example 1) in the near infrared range of electromagnetic radiation. Based on these properties the coating is well suitable as a radiation-absorbing coating for digital laser-based printing methods.

### Example 5

A solution comprising a PVC-based polymer and carbon black particles dispersed therein and an isocyanate solution were combined, homogenized and poured onto a glass plate. After drying at room temperature the coating composition was cross-linked at 150°C for 30 minutes.

**Formulation of the coating composition:**

| | |
|---|---|
| Ucar™ VAGH Solution Vinyl Resin (Dow Chemical) | 5.2 |
| n-Butyl acetate | 34.05 |
| 2-Butanone | 34.1 |
| Black Pearls® 120 (Cabot) | 23.2 |
| Desmodur® L 75 (Bayer) | 3.4 |
| Epoxidized soy bean oil or ERL 4221 | 0.05 |
| Total | 100.0 |

The resulting coating containing about 75 wt.-% of carbon black particles (average particle size 60 nm) was solvent-resistant (e.g. to ethanol, ethyl acetate, ethoxy propanol, toluene and the combinations of solvents and plasticizers used in the aforementioned test) to a very high degree, displayed very good mechanical stability and strong absorption (although markedly lower than in Example 1) in the near infrared range of electromagnetic radiation. Based on these properties the coating is suitable as a radiation-absorbing coating for digital laser-based printing methods.

### Example 6

A solution comprising a PVB-based polymer and carbon black particles dispersed therein and an isocyanate solution were combined, homogenized and poured onto a glass plate. After drying at room temperature the coating composition was cross-linked at 150°C for 30 minutes.

**Formulation of the coating composition:**

| | |
|---|---|
| Pioloform® BN 18 (Wacker) | 4.0 |
| n-Butyl acetate | 25.0 |
| 2-Butanone | 42.7 |
| Black Pearls® 120 (Cabot) | 25.0 |
| Desmodur® L 75 (Bayer) | 3.3 |
| Total | 100.0 |

The resulting coating containing about 79 wt.-% of carbon black particles (average particle size 60 nm) was solvent-resistant (e.g. to ethanol, ethyl acetate, ethoxy propanol, toluene and the combinations of solvents and plasticizers used in the aforementioned test) to a high degree, displayed good mechanical stability and strong absorption in the near infrared range of electromagnetic radiation. Based on these properties the coating is well suitable as a radiation-absorbing coating for digital laser-based printing methods.

### Example 7

A solution comprising a PVB-based polymer and carbon black particles dispersed therein and an isocyanate solution were combined, homogenized and poured onto a glass plate. After drying at room temperature the coating composition was cross-linked at 150°C for 30 minutes.

**Formulation of the coating composition:**

| | |
|---|---|
| Pioloform® BN 18 (Wacker) | 1.8 |
| n-Butyl acetate | 36.0 |
| 2-Butanone | 36.0 |
| Black Pearls® 120 (Cabot) | 25.0 |
| Desmodur® L 75 (Bayer) | 1.2 |
| Total | 100.0 |

The resulting coating containing about 90 wt.-% of carbon black particles (average particle size 60 nm) was solvent-resistant (e.g. to ethanol, ethyl acetate, ethoxy propanol, toluene and the combinations of solvents and plasticizers used in the aforementioned test) to a high degree, displayed good mechanical stability and strong absorption in the near infrared range of electromagnetic radiation. Based on these properties the coating is well suitable as a radiation-absorbing coating for digital laser-based printing methods.

### Example 8

An isocyanate blocked with phenol groups was added to a solution comprising a PVC-based polymer and carbon black particles dispersed therein and the mixture was homogenized. The resulting coating composition was stable in storage for an extended period (e.g. at least one month). To produce a coating the composition was poured onto a glass plate and after drying at room temperature was cross-linked at 160°C for 50 minutes.

**Formulation of the coating composition:**

| | |
|---|---|
| Ucar™ VAGH Solution Vinyl Resin (Dow Chemical) | 4.0 |
| n-Butyl acetate | 34.0 |
| 2-Butanone | 34.7 |
| Black Pearls® 120 (Cabot) | 25.0 |
| Desmodur® CT stabil (Bayer) | 2.2 |
| Epoxidized soy bean oil | 0.1 |
| Total | 100.0 |

The resulting coating containing about 80 wt.-% of carbon black particles (average particle size 60 nm) was solvent-resistant (e.g. to ethanol, ethyl acetate, ethoxy propanol, toluene and the combinations of solvents and plasticizers used in the aforementioned test) to a very high degree, displayed very good mechanical stability and very strong absorption in the near infrared range of electromagnetic radiation. Based on these properties the coating is very well suitable as a radiation-absorbing coating for digital laser-based printing methods.

The formulation presented in Example 8 (or other formulations for coating compositions according to the invention containing cross-linking agents with blocked isocyanate groups) can be stored and sold in the form of a one-component system or a two-component system, the formulations presented in Examples 1 to 7 (containing cross-linking agents with free isocyanate groups) can be advantageously stored and sold in the form of two-component systems.

### REFERENCE EXAMPLES

### Reference example 1

A solution comprising a PVC-based polymer and carbon black particles dispersed therein and an isocyanate solution were combined, homogenized and poured onto a glass plate. After drying at room temperature the coating composition was cross-linked at 150°C for 30 minutes.

**Formulation of the coating composition:**

| | |
|---|---|
| Ucar™ VAGH Solution Vinyl Resin (Dow Chemical) | 0.7 |
| n-Butyl acetate | 34.35 |
| 2-Butanone | 34.5 |
| Black Pearls® 120 (Cabot) | 30.0 |
| Desmodur® L 75 (Bayer) | 0.4 |
| Epoxidized soy bean oil or ERL 4221 | 0.05 |
| Total | 100.0 |

The resulting coating containing about 97 wt.-% of carbon black particles (average particle size 60 nm) displayed very strong absorption in the near infrared range of electromagnetic radiation. Due to its low solvent resistance and very low mechanical stability, however, it is not suitable as a radiation-absorbing coating for digital laser-based printing methods.

### Reference example 2

A solution comprising a PVC-based polymer and carbon black particles dispersed therein was poured onto a glass plate. After drying at room temperature the coating composition was heated for 30 minutes at 150°C.

**Formulation of the coating composition:**

| | |
|---|---|
| Ucar™ VAGH Solution Vinyl Resin (Dow Chemical) | 6.0 |
| n-Butyl acetate | 34.45 |
| 2-Butanone | 34.5 |
| Black Pearls® 120 (Cabot) | 25.0 |
| Epoxidized soy bean oil or ERL 4221 | 0.05 |
| Total | 100.0 |

The resulting coating containing about 81 wt.-% of carbon black particles (average particle size 60 nm) displayed very strong absorption in the near infrared range of electromagnetic radiation. Due to its very low solvent resistance, however, it is not suitable as a radiation-absorbing coating for digital laser-based printing methods.

## Claims

1. Coating composition comprising (a) carbon black particles with an average particle size of 10 to 500 nm, (b) a binder selected from at least one polymer displaying functional groups which allow cross-linking via an isocyanate-based cross-linking agent, (c) at least one isocyanate-based cross-linking agent and (d) at least one solvent, wherein the carbon black particles are distributed homogeneously in the composition and the amount of carbon black particles, based on the total amount of components (a), (b) and (c) in the composition, is 75 to 95 wt.-%.

2. Coating composition according to claim 1, wherein the amount of carbon black particles, based on the total amount of components (a), (b) and (c) in the composition, is 80 to 85 wt.-%.

3. Coating composition according to claim 1 or 2, wherein the average particle size of the carbon black particles is 15 to 100 nm.

4. Coating composition according to claim 1 or 2, wherein the average particle size of the carbon black particles is 30 to 70 nm.

5. Coating composition according to claim 1 or 2, wherein the average particle size of the carbon black particles is 50 to 60 nm.

6. Coating composition according to any one of claims 1 to 5, wherein the binder is selected from at least one polymer on the basis of a polyvinyl chloride, polyvinyl butyral, polyurethane, polyether polyol, polyester polyol, fluorinated resin, chlorinated polyethylene or chlorinated polypropylene, which comprises functional groups that allow cross-linking via an isocyanate-based cross-linking agent.

7. Coating composition according to any one of claims 1 to 6, wherein the binder is selected from at least one polymer on the basis of a polyvinyl chloride or polyvinyl butyral, which comprises functional groups that allow cross-linking via an isocyanate-based cross-linking agent.

8. Coating composition according to any one of claims 1 to 7, wherein the functional groups allowing cross-linking via an isocyanate-based cross-linking agent are selected from hydroxy groups, primary and secondary amino groups, mercapto groups and any combinations thereof.

9. Coating composition according to any one of claims 1 to 8, wherein the cross-linking agent is selected from a polyisocyanate, a diisocyanate and a triisocyanate, respectively.

10. Radiation-absorbing coating comprising (a) carbon black particles with an average particle size of 10 to 500 nm and, as a matrix therefor, a cross-linked polymer obtained by cross-linking (b) a binder selected from at least one polymer displaying functional groups which allow cross-linking via an isocyanate-based cross-linking agent and (c) at least one isocyanate-based cross-linking agent, wherein the carbon black particles are distributed homogeneously in the matrix and the amount of carbon black particles, based on the total weighed-in amount of components (a), (b) and (c), is 75 to 95 wt.-%.

11. Radiation-absorbing coating according to claim 10, wherein the amount of carbon black particles, based on the total weighed-in amount of components (a), (b) and (c), is 80 to 85 wt.-%.

12. Radiation-absorbing coating according to claim 10 or 11, wherein the average particle size of the carbon black is 15 to 100 nm.

13. Radiation-absorbing coating according to claim 10 or 11, wherein the average particle size of the carbon black is 30 to 70 nm.

14. Radiation-absorbing coating according to claim 10 or 11, wherein the average particle size of the carbon black particles is 50 to 60 nm.

15. Radiation-absorbing coating according to any one of claims 10 to 14, wherein the binder is as defined in any one of claims 6 or 7.

16. Radiation-absorbing coating according to any one of claims 10 to 15 on a dimensionally stable support.

17. Coated dimensionally stable support comprising a coating composition according to any one of claims 1 to 9 or a radiation-absorbing coating according to any one of claims 10 to 15.

18. Coated dimensionally stable support according to claim 17, wherein the layer thickness of the coating is 0.5 to 200 µm.

19. Coated dimensionally stable support according to claim 17 or 18, wherein the dimensionally stable support consists of metal, glass, plastic material, ceramic material or composite materials of two or more of the above-mentioned materials.

20. Coated dimensionally stable support according to any one of claims 17 to 19, wherein the dimensionally stable support is cylindrical or in band form or is in the form of a sleeve or a plane or curved plate.

21. Coated dimensionally stable support according to any one of claims 17 to 20, wherein the dimensionally stable support is cylindrical.

22. Coated dimensionally stable support according to any one of claims 17 to 21, wherein the dimensionally stable support has an essentially smooth surface.

23. Process for coating a dimensionally stable support comprising the steps of
(i) providing a coating composition according to any one of claims 1 to 9; (ii) applying the coating composition in the form of a layer onto at least one surface of a dimensionally stable support; and (iii) drying; and (iv) cross-linking the applied coating composition to obtain a radiation-absorbing coating.

24. Process according to claim 23, wherein the cross-linking takes place at a temperature of 80°C to 180°C.

25. Process according to claim 23 or 24, wherein the layer thickness of the dried and cross-linked coating is 0.5 to 200 *µ*m.

26. Process according to any of claims 23 to 25, wherein the dimensionally stable support is as defined in any of claims 19 to 22.

27. Use of the coating composition according to any one of claims 1 to 9 for producing a radiation-absorbing coating on a dimensionally stable support as defined in any one of claims 19 to 22.

28. Use of the radiation-absorbing coating according to any one of claims 10 to 16 in a printing process for absorbing radiation and converting the radiation to heat.

29. Use according to claim 28, wherein the radiation is radiation in the infrared range.

30. Use of the coated dimensionally stable support according to any one of claims 17 to 22 for transferring printing substance to a printing substrate with an energy-releasing device which is arranged such that energy can be transferred in a targeted manner to certain areas of the coated dimensionally stable support, wherein the coated dimensionally stable support is intended to accept printing substance essentially in the form of a continuous film.

31. Printing machine for imprinting of a printing substrate, comprising a coated dimensionally stable support according to any one of claims 17 to 22 and an energy-releasing device which is arranged such that energy can be transferred in a targeted manner to certain areas of the coated dimensionally stable support, wherein the coated dimensionally stable support is intended to accept printing substance essentially in the form of a continuous film.

32. Printing process for transferring printing substance from a coated dimensionally stable support according to any one of claims 17 to 22 to a printing substrate or a transfer medium wherein the printing substance is subject to a change in volume and/or position due to an induced process by an energy-releasing device, which results in a transfer of a printing dot to the printing substrate or the transfer medium, wherein the printing substance is applied to the coated dimensionally stable support essentially in the form of a continuous film.

33. Printing machine according to claim 31 or printing process according to claim 32, wherein at least one device emitting laser radiation is used as energy-releasing device, wherein the laser beam is directed to selected points to be printed on the coated dimensionally stable support and is preferably focused.
